# EUROPEAN PATENT APPLICATION

(11) **EP 2 926 663 A1**
(43) Date of publication of application: **07.10.2015**
(21) Application number: 15161675.2
(22) Date of filing: 30.03.2015
(51) Int. Cl.: A21B 3/02, A21B 3/07, A21B 7/00, F24C 15/02

(54) **Improvements related to par baking and similar baking processes**

(30) Priority: 31.03.2014 AU 2014901159
(71) Applicant: Moffat Pty Limited, Mulgrave, Victoria 3170 (AU)
(72) Inventor: Willett, Paul Eaton, Whiteside, Queensland 4503 (AU)
(74) Representative: Potter Clarkson LLP

(57) **Abstract**

The invention relates to an oven configured with a fixed front wall, a baking space behind the fixed front wall, heating elements at a rear of the baking space and opposite the fixed front wall, or above or below the baking space, and at least one door at a side of the baking space, which door is openable to the rear to provide a side access opening configured to permit food items to be loaded into and/or unloaded out of the baking space.

## Description

### Field of the invention

This invention relates generally to improvements in commercial baking processes and has particular though not exclusive application to par baking and similar processes in which food items are finished in a point-of-sale oven after partial preparation elsewhere. In particular aspects, the invention is directed to an oven and to a food handling installation suitable for use in such processes.

### Background of the invention

A number of processes have been developed for producing freshly baked product at or close to a point of sale without necessarily producing the product from starting ingredients on site. Because floor space and expertise in personnel are typical problems in most bakeries, it is an advantage to have a process that requires the least floor space and requires the least training and yet produces a good quality product.

One such process is known as par baking. In this process the product, such as a bread roll, is completely formed and partly baked, as much as 80 or 90%, at a mass production facility. The product is frozen shortly after it is cooled then placed in cartons and kept refrigerated or frozen until use, at the point of sale. Such partially baked products remain fresh for a much longer period than a fully baked product but lack the external finish, e.g. crust and colour.

Another product range that complements this process is "frozen unbaked" items such as frozen cookies, Danish pastries and the like. These products have been developed with ingredients that permit the product to be placed on trays and into an oven while still frozen. While in the oven, the product dough will thaw, spread out and bake.

Another option still is to have products that are raw but "proved" so that the roll or bread stick, for example, is ready to bake once it has partly thawed.

In the working zone of many point-of-sale bakeries, e.g. in standalone retail outlets and in supermarkets, space is always limited but of late favoured layouts have often been long and narrow. Work benches and ovens are typically laid out along one side of these spaces. Commercially prepared product according to one or more of the above processes is delivered from a freezer room in prepacked cartons, and the product is transferred manually to baking trays. The trays are placed in an appropriate oven for baking, then removed for cooling on racks. A short time later, the product is ready for sale. Because the onsite finish baking time may be only a few minutes, point-of-sale bakeries can adapt production to sales on a "just in time" basis.

This approach to the retailing of bread and other bakery items has been well known for a number of years, and there has been little change in the essential layout and workflow practices of point-of-sale bakeries. It is an object of the invention to provide one or more improvements that facilitate bakery work practices and management at point-of-sale bakeries and other fresh cookery outlets.

Reference to any prior art in the specification is not an acknowledgment or suggestion that this prior art forms part of the common general knowledge in any jurisdiction or that this prior art could reasonably be expected to be understood, regarded as relevant, and/or combined with other pieces of prior art by a skilled person in the art.

### Summary of the invention

The inventor has observed that conventional ovens employed at point of sale bakeries for the end stage of par baking and similar processes have become problematic, especially as workspaces have narrowed or otherwise shrunk. The oven door often opens into a work corridor. There are significant risks involved in removing hot baking trays that can pose a danger to passing staff. The oven door can be in the way of the flow of trays to the cooling rack, and the process often has no defined flow direction with hot trays being placed wherever there is room. In accordance with a first aspect of the invention, it has been appreciated that these issues can be addressed by providing a novel configuration of oven having one or more side sliding doors.

According to the first aspect of the invention, there is provided an oven configured with a fixed front wall, a baking space behind the fixed front wall, heating elements at a rear of the baking space and opposite the fixed front wall, or above or below the baking space, and at least one door at a side of the baking space, which door is openable to the rear to provide a side access opening configured to permit food items to be loaded into and/or unloaded out of the baking space.

By being openable to the rear, it is meant that the door is openable in a direction that is away from the fixed front wall, such as towards a rear wall of the oven.

The door is preferably openable to the rear by being slidable to the rear.

The door is preferably in a substantially orthogonal orientation to the fixed front wall.

Preferably there is a rearwardly openable door as above described at both sides of the baking space, in order to optimise flexibility in the placement and withdrawal of food items into and from the baking space. That is, in a preferred embodiment the oven additionally includes a second door located at a second side of the baking space, the second door openable to the rear to provide a second side access opening configured to permit food items to be loaded into and/or unloaded out of the baking space. It is preferred that the second door is openable to the rear by being slidable to the rear.

More preferably, the oven is configured such that the side access opening is configured to permit food items to be loaded into the baking space, and the second side opening is configured to permit food items to be unloaded from the baking space. In this way, the side access opening and the second side access opening cooperate to form a workflow path in which food items can be loaded and unloaded from the baking space. That is, in an embodiment the oven is configured so that the side access opening and the second side access opening define a workflow path, wherein the side access opening is configured to permit food items to be loaded into the baking space, the baking space is configured to bake the food items, and the second side access opening is configured to permit unloading of the food items from the baking space.

As discussed above, by being openable to the rear, it is meant that the second door is openable in a direction that is away from the fixed front wall, such as towards a rear wall of the oven.

The second door is preferably in a substantially orthogonal orientation to the fixed front wall.

The second door is preferably in a substantially parallel orientation to the door.

Advantageously, the fixed front wall is transparent, in order to optimise monitoring the progress of baking.

In an embodiment, the fixed front wall is arranged so that food items are unable to be loaded or unloaded from the baking space through the fixed front wall. Preferably, the fixed front wall is not openable and/or does not include any openings to permit access to the baking space during normal use. By normal use, it is generally meant the steps of loading food items into the baking space, or unloading food items out of the baking space. It will be understood however, that the fixed front wall may be openable or otherwise removable from the oven for maintenance purposes.

In an embodiment, the fixed front wall is formed from a unitary panel. Preferably, the unitary panel does not include any openings, such as openings that permit access from outside the oven to the baking space.

In an embodiment, the unitary panel is a unitary glass panel.

Advantageously, the heating elements are at the rear of the baking space opposite the fixed front wall.

There may also typically be one or more convection fans and associated ducting arrangements adjacent the baking space.

In an embodiment food items are loaded into the baking space on food racks or trays, or rack cassettes. The term "rack cassettes" is generally used throughout the description and is intended to encompass a frame that is configured to support a plurality of trays, wherein each of the trays in the plurality can hold food items. The rack cassettes, once loaded with trays holding food items can be loaded into the baking space, so that the food items can be baked. Preferably, the side access opening is adapted to permit a rack cassette to be loaded into and/or unloaded out of the baking space. In the case where a second side access opening is provided, it is preferred that the second side access opening is also adapted to permit the rack cassette to be loaded into and/or unloaded out of the baking space.

Advantageously, the oven is fitted with retractable runners positionable to the exterior of the or each access opening to receive rack cassettes for sliding or rolling into and from the baking space.

It has been also observed by the inventor that a particular difficulty arises in the final stage of par baking and similar processes in relation to the reliable arrangement of frozen and prebaked food items onto baking trays or sheets at the bench top workstation. The food items used in these processes can vary greatly in size and weight, and the total range can be over one hundred separate items, each requiring slightly different spacing one from the other on the baking tray or sheet, to optimise baking and to avoid products like cookies joining up. It is also important that the individual items are spread evenly throughout the tray space as sparsely populated regions, or unoccupied regions at the periphery of the items, will result in overcooking of items in or adjacent these regions. Correctly placing each different kind of food item at the correct even spacing and positions can therefore be labour intensive for inexperienced staff

In a second aspect, the inventor has addressed this problem of correct placement by providing a food handling installation in which one of a plurality of selectable viewable patterns are projected onto a tray or sheet placed at a tray support station, the patterns defining different arrays of placement locations for different kinds of food items.

According to the second aspect of the invention, there is provided a food handling installation comprising a bench having a portion that provides a tray support station, and projection means located and actuatable to project one of a plurality of selectable viewable patterns onto a tray or sheet at said support station, which patterns respectively define different arrays of placement locations for different kinds of food items to be baked on trays filled at the tray support station.

Preferably, the baking tray or sheet is a dark colour, e.g. black, and the projected pattern is a contrasting light coloured layout, e.g. white.

Preferably, the food handling installation further includes a device for reading identification tags or labels on cartons or other containers of the food items, and a controller of the projection means, or associated with the projection means, selects the required viewable pattern to be projected according to the identification data. The information read from the identification tag or label may include for example product type, use by date, quantity in carton, or special process instructions such as the required tray layout pattern.

As used herein, except where the context requires otherwise, the term "comprise" and variations of the term, such as "comprising", "comprises" and "comprised", are not intended to exclude further additives, components, integers or steps.

### Brief description of the drawings

The invention will now be described, by way of example only, with reference to the accompanying drawings, in which:
Figure 1 is a plan layout diagram of a food handling installation at a point of sale bakery, according to an embodiment of both aspects of the invention;
Figure 2 is a front view of the installation;
Figure 3 is a cross section through an oven on the line 3-3 in Figure 2; and
Figure 4 is a fragmentary front view depicting movement of trays to and from an oven.

### Description of embodiments of the invention

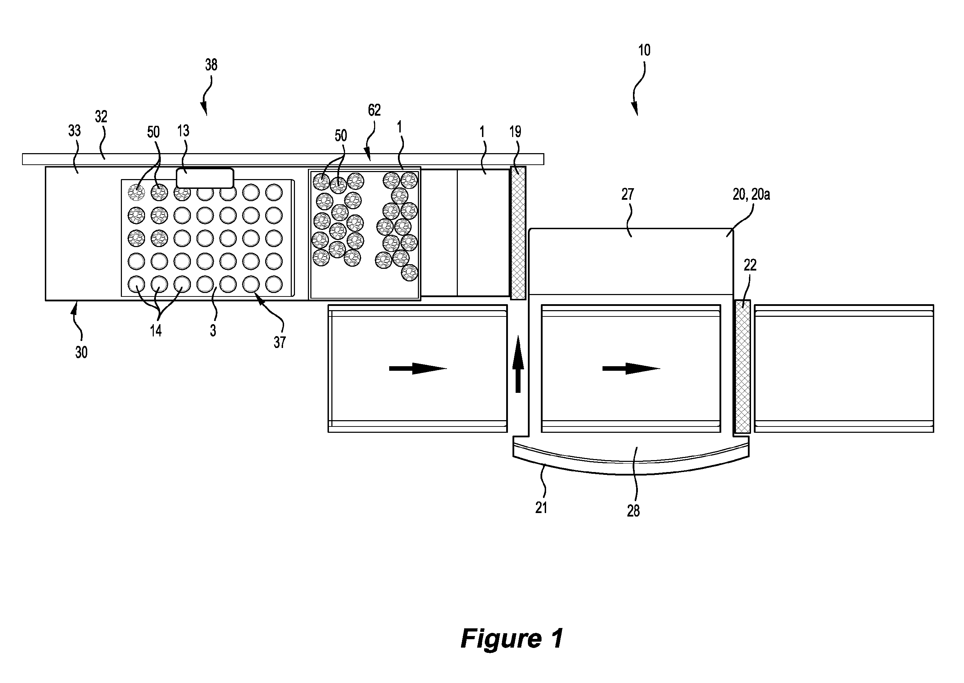

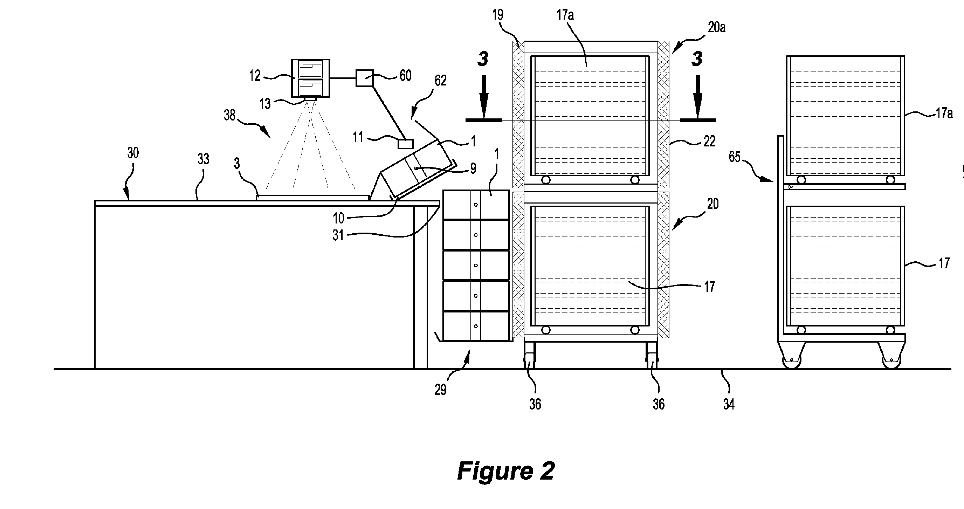

The food handling installation 10 depicted in Figures 1 and 2 includes a work bench 30 placed against and extending along a side wall 32 of the workspace in which the installation is located. Spaced along the wall from a near end 31 of work bench 30, and resting on the floor 34 via short legs 36, is a stacked pair of ovens 20, 20a. The optimum location of these ovens relative to wall 32 will become apparent later.

Spaced along work bench 30 from end 31 is a tray support station 38 where a person rests a baking tray or baking sheet 3 on the bench top 33 for filling the tray with food or bakery items 50. Located at tray support station 38 is a display screen 13 and an associated projector 12 actuatable manually or automatically to project one of a plurality of selectable viewable patterns 37 onto a tray or sheet 3 on the bench top. Pattern 32 includes images 14 that clearly define the locations at which the bakery items are to be placed.

In a typical workflow, the bakery items are delivered to the food handling installation 10 in cartons 1 that, for example, may be conveniently stacked in the space 29 immediately adjacent the end 31 of work bench 30 and up against wall 32. Each carton carries an electronic identification tag or label 9, e.g. a stick-on magnetic label or RFID tag. This label is automatically read by a reader scanner 11 as the top carton is moved onto an unloading station 62 of the work bench between bench end 31 and tray support station 38. The information readable from electronic identification tag or label 9 may include, for example, product type, use by date, quantity in carton and process instructions, and the desired tray layout pattern. A suitable controller 60 receives the information read and displays it on display screen 12, and furthermore actuates projector 13 to project the appropriate pattern 37 onto the tray. Typically, there will be a range of pre-provided patterns in memory and the controller will select the pattern according to the information read for the respective carton.

The projected pattern allows a relatively untrained or unskilled operator to fill the bakery tray or sheet rapidly and correctly by placing the bakery items in an optimal array for successful baking. The tray can now be moved onto a multi tray cassette 17. Once this cassette, which is typically located in front of the stacked cartons and unloading station 62 (Figure 1), the cassette is delivered to the ovens.

In accordance with an embodiment of the first aspect of the invention, each oven 20, 20a comprises a floor 64, top 65 and fixed front wall 21 defining, with a rear structure 27, a baking space 28. Rear structure 27 mounts and locates heating elements 25 at the rear of the baking space 28 and opposite front wall 21. It also mounts a central convection fan 23 and associated rearwardly projecting motor 24, as well as appropriate air ducting arrangements 26.

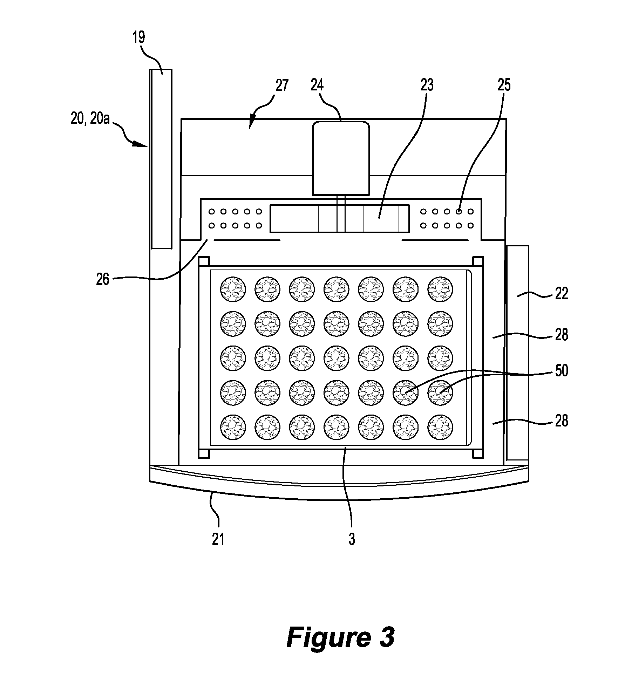

At each side of the oven adjacent the respective ends of fixed front wall 21, access openings for baking space 28 are controlled by sliding doors 19, 22 that are selectably slidable rearwardly from closed conditions (shown for door 22 in Figures 1 and 3), to a rearward fully opened position (shown for door 19). The rearward location of the doors adjacent wall 32 determines the optimum location of the oven relative to the wall. Doors 19, 22 may be manually operable, or moved by a linear actuator on operation of a suitable switch or button, or on initiation of door movement. In an alternative, less preferred arrangement, doors 19, 22 are otherwise openable to the rear, e.g. hinging back.

Front wall 21 is preferably a clear or transparent glass panel to facilitate viewing of baking product from the front. Doors 19, 22 are also preferably glass or otherwise transparent doors.

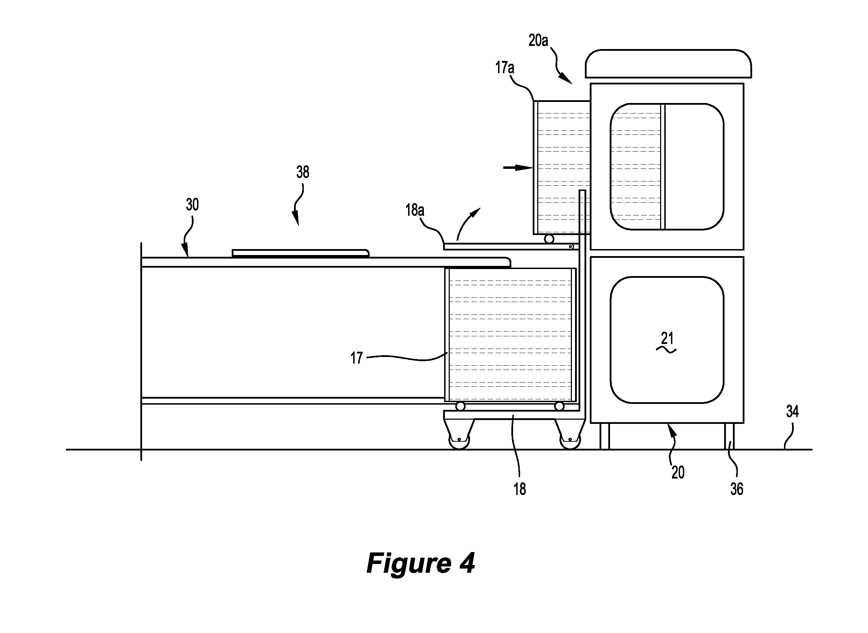

Runners 18 are arranged to project from the oven at the bottoms of openings 29 for supporting tray cassettes 17, in the case of one side in front of the unloading station 62 and carton stacking position. Runners 18, 18a can be hinged for upward or downward retraction out of the way when not in use. In the view of Figure 4, one cassette 17a is being rolled into the upper oven 20a from runners 18a of the upper oven while the other cassette 17 is resting on the runners 18 of the lower oven 20.

When baking is complete, the door 22 on the right may be opened for withdrawal of the baked products or trolleys 65, permitting more fresh items to be rolled in from the left side. Alternatively of course, the rack can be rolled back out to the left to allow the right side to be loaded, for example from an adjacent second work station.

It will be appreciated that the doors 19, 22 may slide upwards and that the heating elements may be arranged above or below the baking space but the illustrated configuration is preferable as it allows ovens to be stacked as depicted.

The illustrated food handling installation has a number of advantages over conventional layouts. Projection of patterns onto the baking sheets or trays permits rapid and optimum placement of food items onto the trays or sheets. This is further optimally managed by employing electronic identification tags on the cartons, making it possible to ensure that the correct pattern is automatically projected. The oven configuration allows a through flow of stacked trays in a linear fashion without any interference with the personnel corridor in front of the oven.

It will be understood that the invention disclosed and defined in this specification extends to all alternative combinations of two or more of the individual features mentioned or evident from the text or drawings. All of these different combinations constitute various alternative aspects of the invention.

## Claims

1. An oven configured with a fixed front wall, a baking space behind the fixed front wall, heating elements at a rear of the baking space and opposite the fixed front wall, or above or below the baking space, and at least one door at a side of the baking space, which door is openable to the rear to provide a side access opening configured to permit food items to be loaded into and/or unloaded out of the baking space.

2. The oven of claim 1, wherein the door is openable to the rear by being slidable to the rear.

3. The oven claim 1, wherein the door is in a substantially orthogonal orientation to the fixed front wall.

4. The oven of claim 1, wherein the fixed front wall is arranged so that food items are unable to be loaded into or unloaded out of the baking space through the fixed front wall.

5. The oven of claim 1, wherein the fixed front wall is not openable and/or does not include any openings to permit passage of food items to the baking space when loading food items into the baking space.

6. The oven of claim 1, further including a second door located at a second side of the baking space, the second door openable to the rear to provide a second side access opening configured to permit food items to be loaded into and/or unloaded out of the baking space.

7. The oven of claim 6, wherein the second door is openable to the rear by being slidable to the rear.

8. The oven of claim 6 or 7, wherein the oven is configured such that the side access opening is configured to permit food items to be loaded into the baking space, and the second side access opening is configured to permit food items to be unloaded from the baking space.

9. The oven of any one of claims 6 to 8, wherein the oven is configured so that the side access opening and the second side access opening define a workflow path, the side access opening being configured to permit food items to be loaded into the baking space, the baking space being configured to bake the food items, and the second side access opening is configured to permit unloading of the baked food items from the baking space.

10. The oven of claim 9, wherein the side access opening is adapted to permit a rack cassette to be loaded into and/or unloaded out of the baking space.

11. The oven of claim 10, wherein the second side access opening is adapted to permit a rack cassette to be unloaded out of the baking space.

12. The oven of any one of claims 10 or 11, wherein the oven is fitted with retractable runners positionable to the exterior of the or each access opening to receive rack cassettes for sliding or rolling into and from the baking space.

13. The oven of any one of the preceding claims wherein the fixed front wall is formed from a unitary panel,

14. The oven of claim 13, wherein the unitary panel does not include any openings.

15. The oven of claim 13 or 14, wherein the unitary panel is a unitary glass panel.
